Europäisches Patentamt

European Patent Office

Office européen des brevets

(11) Veröffentlichungsnummer: **0 365 816**
**A1**

(12) # EUROPÄISCHE PATENTANMELDUNG

(21) Anmeldenummer: **89116993.0**

(22) Anmeldetag: **14.09.89**

(51) Int. Cl.⁵: **B62D  25/16**

(30) Priorität: **19.10.88 DE 8813149 U**

(43) Veröffentlichungstag der Anmeldung:
**02.05.90 Patentblatt  90/18**

(84) Benannte Vertragsstaaten:
**AT BE CH DE ES FR GB GR IT LI LU NL SE**

(71) Anmelder: **KÖVER GMBH & CO. KG Metall-
und Kunststoffverarbeitung
Postfach 13 63
D-2150 Buxtehude(DE)**

(72) Erfinder: **Jürges, Heinz-Henning
Ellerbruch 18
D-2150 Buxtehude(DE)**

(74) Vertreter: **Grättinger, Günter
Wittelsbacherstrasse 5 Postfach 16 49
D-8130 Starnberg(DE)**

(54) **Kotflügel.**

(57) Ein Kotflügel 3 mit verbesserter Sprühnebelunterdrückung ist mit der Rückseite seiner Umfangswand 4 über die Reifenmitte nach unten gezogen; er
übergreift den Reifen 2 auch an seiner Außenseite
und besitzt an der Wandinnenseite eine als Randeinbiegung ausgebildete umlaufende Spritzwasserrinne
6.

Fig.2

EP 0 365 816 A1

## Kotflügel

Die Erfindung betrifft einen Kotflügel insbesondere für LKW gemäß dem Oberbegriff von Schutzanspruch 1.

Derartige bislang übliche Kotflügel aus Blech oder Kunststoff sind, wie Untersuchungen ergeben haben, in Bezug auf die Unterdrückung von Sprühnebel bei Regen oder nasser Fahrbahn nur unzureichend ausgebildet.

Ein bekannter Kotflügel (Deutsches Gebrauchsmuster G 81 10 658.0) besitzt zur Sprühnebelunterdrückung eine Umfangswand mit an der Innenseite profilierter Oberfläche, welche zueinander parallele und in Umfangsrichtung des Kotflügels verlaufende Nuten enthält. Die den Sprühnebel bildenden, vom abrollenden Reifen abgeschleuderten Wassertröpfchen werden in den Nuten gesammelt und insbesondere vom rückseitigen Kotflügelrand in die Umgebung versprüht. Hinzu kommt, daß zwischen Reifen und Kotflügel ein nach außen offener Spalt vorhanden ist, aus welchem seitlich Sprühnebel austritt.

Demgegenüber liegt der vorliegenden Erfindung die Aufgabe zugrunde, einen Kotflügel zu schaffen, mit welchem eine gegenüber dem Stand der Technik verbesserte Sprühnebelunterdrückung erzielt wird.

Diese Aufgabe wird nach dem Vorschlag der Erfindung durch die im Kennzeichen von Schutzanspruch 1 enthaltenen Merkmale gelöst.

Der erfindungsgemäße Kotflügel bringt nicht nur eine bessere Kammerung des Reifens mit sich, welche bewirkt, daß nicht nur die seitliche, sondern auch die rückwärts gerichtete Sprühnebelwolke weitgehend reduziert wird; der erfindungsgemäße Vorschlag zeichnet sich besonders noch dadurch aus, daß die im Inneren des Kotflügels aufgefangenen Sprühnebeltröpfchen durch die glatte Ausbildung der Kotflügelinnenwände direkt in der den Kotflügelrand einsäumenden Spritzwasserrinne aufgefangen und von dort als große, nicht mehr versprühbare Wassertropfen auf den Boden gelangen. Daher ist es im Rahmen des Erfindungsvorschlags bedeutsam, den rückseitigen Kotflügelrand möglichst weit nach unten zu ziehen.

Es kann ferner daran gedacht sein, den Reifen an seiner Außenseite zusätzlich durch eine weit nach unten gezogene Außenwand des Kotflügels abzudecken. Bei einer derartigen Kapselung des Reifens ist jedoch zu beachten, daß noch eine ausreichende Kühlung der Bremstrommeln bzw. -scheiben erzielt wird.

Ein geregelter Abfluß des in der Spritzwasserrinne aufgefangenen Spritzwassers ist vorteilhaft dadurch erzielbar, daß die Spritzwasserrinne im Bereich des vorder- und/oder rückseitigen Rands der Umfangswand, in Richtung Fahrzeugmitte gesehen, schräg nach unten verläuft und im tiefsten Punkt eine Ablauföffnung besitzt. Das Spritzwasser gelangt dadurch an der Reifeninnenseite auf den Boden, sodaß es von einem nachfolgenden Reifen desselben Fahrzeugs nicht mehr erfaßt wird.

Zweckmäßig wird der erfindungsgemäße Kotflügel einschließlich der Spritzwasserrinne aus Kunststoff geformt; er kann aber auch aus Blech hergestellt werden, z.B. durch Walzen und nachfolgendes Einrollen der Spritzwasserrinne.

Die Randhöhe der bogenförmigen Seitenwand des Kotflügels beträgt bevorzugt etwa 15 cm. Dadurch läßt sich eine sichere Kapselung des gesamten Reifenumfangs auch in der maximal durchgefederten Position der Fahrzeugräder erzielen.

Im folgenden wird ein Ausführungsbeispiel der Erfindung anhand der Zeichnung beschrieben. Es zeigt

Fig. 1 eine Seitenansicht des Kotflügels und

Fig. 2 eine Vorderansicht des Kotflügels gemäß Fig. 1 mit einem vertikalen Teilschnitt im oberen Bereich.

Gemäß den beiden Zeichnungsfiguren verläuft die Umfangskontur (1) des Reifens (2) innerhalb des Kotflügels (3), dessen Umfangswand (4) zusammen mit der bogenförmigen Außenwand (5) den Reifen (2) über mehr als die Hälfte seines Umfangs einhüllt. Die Außenwand (5) übergreift dabei den Reifen (2) auf seiner Außenseite, und zwar auch noch im gezeichneten durchgefederten bzw. lastfreien Zustand der Fahrzeugräder. Bei der dargestellten symetrischen Ausbildung des Kotflügels (3) übergreift ferner dessen Innenwand (9) den Reifen (2) von innen, sodaß ein entsprechend geschlossener Radkasten entsteht. Es ist leicht vorstellbar, daß der vom Reifen (2) erzeugte Sprühnebel durch die erfindungsgemäße Kotflügelform nur zu einem geringen Teil seitlich bzw. nach rückwärts austritt. Die im Kotflügelinnenraum gesammelten Sprühnebeltröpfchen gelangen in eine über den gesamten Rand des Kotflügels (3) umlaufende Spritzwasserrinne (6) und werden von dort nach unten als große, von den Fahrzeugrädern nicht mehr erfaßte Wassertropfen abgeleitet, wobei die Spritzwasserrinne (6) zweckmäßig mit Ablauföffnungen (7) versehen ist.

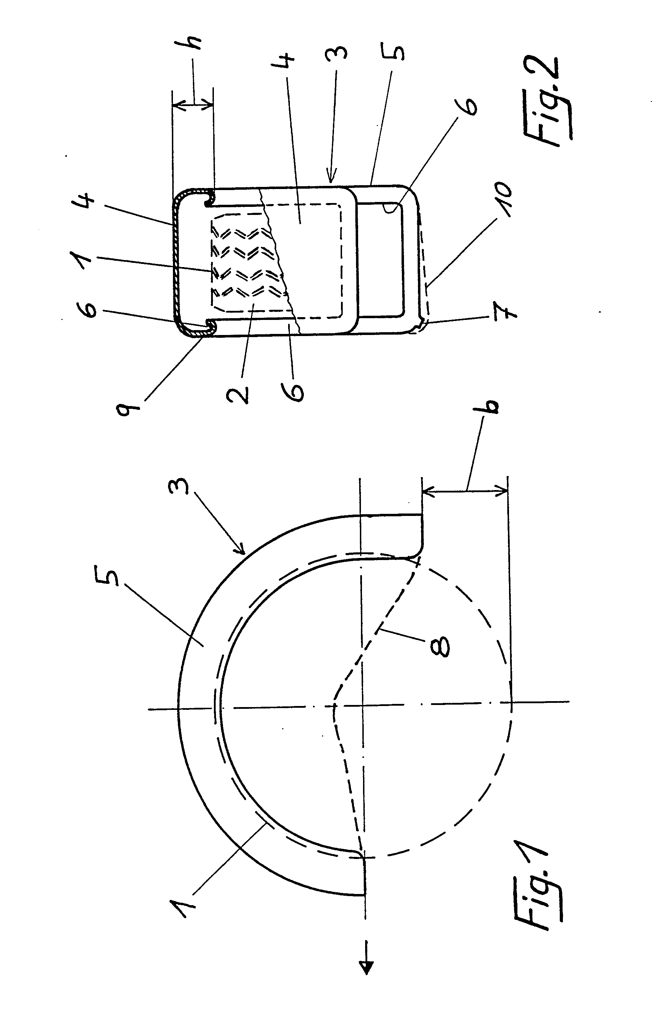

Eine Variante der Kotflügelform ist in Fig. 1 durch eine gestrichelte Linie (8) angedeutet, welche den unteren Rand einer tiefgezogenen Außenwand des Kotflügels bezeichnet.

Eine zweckmäßige Ausführungsform des Kotflügels besitzt eine seitliche Randhöhe h von etwa 15 cm, eine Bodenfreiheit b seines rückwärtigen Randes von etwa 25 cm; die Spritzwasserrinne (6) ist zweckmäßig bis zu 3 cm breit und etwa 1 cm tief. Durch die verhältnismäßig hohe Randhöhe h ist sichergestellt, daß die Reifenoberseite auch bei einer Durchfederung von 80 mm noch in den Radkasten des Kotflügels eintaucht.

In Fig. 2 ist durch eine weitere gestrichelte Linie (10) noch eine Variante mit schrägem Verlauf der Hinterkante des Kotflügels gezeichnet; entsprechend schräg kann auch die Vorderkante des Kotflügels ausgebildet sein. Das tiefere Ende der die jeweilige Kante bildenden Spritzwasserrinne befindet sich dabei auf der Innenseite (9) des Kotflügels.

## Ansprüche

1. Kotflügel, insbesondere für Lastkraftwagen, welcher um einen oberen Teilumfang des Rades herumgeführt ist und wenigstens die Breite des Reifens (2) besitzt, gekennzeichnet durch die folgenden Merkmale:

a) Der Kotflügel (3) ist mit der Rückseite seiner Umfangswand (4) über die Reifenmitte nach unten gezogen;

b) Der Kotflügel (3) übergreift den Reifen (2) auch an seiner Außenseite, derart, daß wenigstens die Umfangskontur (1) des Reifens (2) in den von Umfangs- (4) und Außen- (5) bzw. Innenwand (9) des Kotflügels (3) gebildeten Radkasten eintaucht;

c) Entlang des Kotflügelrands, zumindest im Bereich seiner Außenwand (5) und der daran anschließenden Umfangswand (4), ist an der jeweiligen Wandinnenseite eine umlaufende, nach oben offene Spritzwasserrinne (6) vorgesehen.

2. Kotflügel nach Anspruch 1, dadurch gekennzeichnet, daß die Schmutzwasserrinne (6) als Randeinbiegung des Kotflügels (3) ausgebildet ist.

3. Kotflügel nach Anspruch 1, dadurch gekennzeichnet, daß die Bodenfreiheit (b) des rückseitigen Rands der Umfangswand (4) des Kotflügels (3) etwa 15 bis 50 cm beträgt.

4. Kotflügel nach Anspruch 1, dadurch gekennzeichnet, daß die Außenwand (5) des Kotflügels (3) etwa bogenförmig ausgebildet ist, wobei die Randhöhe (h) des Bogens wenigstens 10 cm beträgt.

5. Kotflügel nach Anspruch 1, dadurch gekennzeichnet, daß die Spritzwasserrinne (6) im Bereich des vorder- und/oder rückseitigen Rands der Umfangswand (4), in Richtung Fahrzeugmitte gesehen, schräg nach unten verläuft und im tiefsten Punkt eine Ablauföffnung (7) besitzt.

6. Kotflügel nach Anspruch 1, dadurch gekennzeichnet, daß er eine im wesentlichen über seine gesamte Höhe geschlossene Außenwand besitzt.0-351

Fig.2

Fig.1

Europäisches Patentamt

**EUROPÄISCHER RECHERCHENBERICHT**

Nummer der Anmeldung

EP · 89 11 6993

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 436 319 (CLUTTER) * Ansprüche; Figuren * --- | 1 | B 62 D 25/16 |
| X | GB-A-2 143 189 (DUNLOP) * Ansprüche; Figuren * --- | 1,2 | |
| A,D | DE-U-8 110 658 (KOTFLUGELFABRIK H.KOVER) * Pag. 2; Figuren * --- | 1 | |
| A | DE-A-2 524 344 (LEIMEISTER) * Ansprüche; Figuren * --- | 1 | |
| A | GB-A-1 584 453 (IRVING) * Ansprüche; Figuren * ----- | 1 | |

|  |
|---|
| **RECHERCHIERTE SACHGEBIETE (Int. Cl.5)** |
| B 62 D |

Der vorliegende Recherchenbericht wurde für alle Patentansprüche erstellt

| Recherchenort | Abschlußdatum der Recherche | Prüfer |
|---|---|---|
| DEN HAAG | 17-01-1990 | PIRIOU J.C. |